# EUROPEAN PATENT SPECIFICATION

(11) **EP 0 725 255 B1**
(45) Date of publication and mention of the grant of the patent: **07.04.2004**
(21) Application number: 96101343.0
(22) Date of filing: 31.01.1996
(51) Int. Cl.: F24F 11/00, F24F 3/06

(54) **Heat pump air conditioner for use in cold districts**
Klimaanlage mit Wärmepumpe für die Verwendung in kalter Umgebung
Installation de climatisation avec pompe thermique à utiliser dans une ambiance froide

(30) Priority: 03.02.1995 JP 1667095
(43) Date of publication of application: 07.08.1996
(73) Proprietor: Hitachi, Ltd., Chiyoda-ku, Tokyo (JP)
(72) Inventor: Oguni, Kensaku, Shimizu-shi (JP); Yasuda, Hiromu, Shizuoka-shi (JP); Nakayama, Susumu, Shizuoka-shi (JP); Takahashi, Mineo, Yachiyo-shi (JP); Kobayashi, Yoshio, Noda-shi (JP); Suzuki, Mikio, Koshigaya-shi (JP); Harada, Fumio, Shimizu-shi (JP)
(74) Representative: Altenburg, Udo, Dipl.-Phys.

(56) References cited:
- EP-A1- 0 502 609
- EP-A2- 0 188 630
- GB-A- 2 249 168
- US-A- 3 654 988
- US-A- 4 644 756
- US-A- 5 224 357

## Description

### BACKGROUND OF THE INVENTION

### Field of the Invention

The present invention relates to a heat pump air conditioner for heating and cooling, and more particularly to a heat pump air conditioner with high heating efficiency suitable for use in cold districts where the temperature of outdoor air is extremely low in winter.

### Description of the Related Art

As an air conditioner for heating and cooling, a heat pump air conditioner using air as a heat source has been widely employed. One example of heat pump air conditioners using air as heat sources is of the type using outdoor air as a heat source and comprising a combination of an outdoor unit made up of a compressor, an outdoor air heat exchanger, an outdoor fan, a expansion device, etc., and an indoor unit made up of an indoor air heat exchanger, an indoor fan, a expansion device, etc. Further, a variety of heating apparatus have been proposed in which the above heat pump air conditioner using outdoor air as a heat source is combined with kerosene so that the heating apparatus are suitably employed in cold districts. One example of those heating apparatus is described in Japanese Patent Unexamined Publication No. 3-211367 or Journal of Refrigeration Association of Japan, Vol. 69, No. 800, pp. 14 to 16. In this air conditioner combined with kerosene, the heat pump air conditioner using air as a heat source is used when the temperature of outdoor air is relatively high in winter, and kerosene is employed when the temperature of outdoor air is extremely low.

Also, Japanese Patent Unexamined Publication No. 3-59349 discloses a refrigerator utilizing a low temperature range of the refrigeration cycle, which comprises a scroll compressor, a condenser, an evaporator, an expansion valve, and a refrigeration circuit for injecting a liquid refrigerant into a mechanism of the scroll compressor.

The reason why heat pump air conditioners using outdoor air as heat sources have become popular is easiness in use, i.e., that they can operate in the desired heating or cooling mode just by turning on a switch. However, the heat pump air conditioners using outdoor air as heat sources are disadvantageous in that when the temperature of outdoor air lowers, the heating capability is reduced and so is the performance factor (= heating capability/electricity input). Accordingly, when the temperature of outdoor air is lower than a certain value, generally around -10 °C, the conventional heat pump air conditioners using outdoor air as heat sources have been designed to execute control of forcibly stopping the operation, or have failed to act as heating apparatus because the temperature of indoor air becomes too low due to a reduction in the heating capability.

Another problem has been in that when the temperature of outdoor air is low, the performance factor is reduced and the heating cost is increased.

Meanwhile, in the prior art wherein the heat pump air conditioners using outdoor air as heat sources are combined with kerosene with a view of solving the above-mentioned problems in the heat pump air conditioners using outdoor air as heat sources, kerosene must be resupplied when the temperature of outdoor air is low and the mode is switched to kerosene heating. This means that the combined type is less convenient to use than the heat pump air conditioners using outdoor air as heat sources which employ electricity alone. Further, the combined type is disadvantageous in complicating the construction of the air conditioner and increasing the initial cost.

The prior art disclosed in Japanese Patent Unexamined Publication No. 3-59349 discloses a refrigerator which employs a liquid injection circuit in a scroll compressor, but it has no consideration for constituting the refrigeration cycle to effect heating by the utilization of outdoor air at low temperature.

### SUMMARY OF THE INVENTION

An object of the present invention is to provide a heat pump air conditioner using outdoor air as a heat source which can develop a high heating capability even when the temperature of outdoor air is low, with the heating cost comparable to that in kerosene heating. In other words, the present invention intends to provide a heat pump air conditioner using outdoor air as a heat source which can develop a high heating capability and a high performance factor even at the low temperature of outdoor air less than -15 °C, and can realize comfortable indoor environment.

Another object of the present invention is to provide a heat pump air conditioner using outdoor air as a heat source which has focused particularly on a heating capability suitable for use in cold districts.

Still another object of the present invention is to provide a heat pump air conditioner for use in cold districts which employs clean energy.

A further object of the present invention is to provide a heat pump air conditioner using outdoor air as a heat source and being suitable for use in cold districts, which is simple in construction and inexpensive.

A still further object of the present invention is to provide a heat pump air conditioner for only heating purpose using outdoor air as a heat source which can develop a high heating capability even when the temperature of outdoor air is low, with the heating cost comparable to that in kerosene heating.

These and other objects are achieved by a heat pump air conditioner as defined in claim 1. Dependent claims 2-4 represent advantageous embodiments of the invention.

In any of the above heat pump air conditioners, preferably, the scroll compressor has the number of turns of scroll lap set to be not less than 3.

Preferably, a delivery valve is provided in a scroll mechanism of the scroll compressor.

Preferably, the heat source side heat exchanger has a heat conducting area three or more times that of the consumption side heat exchanger.

The further aspects mentioned below, do not refer to the claimed invention.

According to a second aspect, there is provided a heat pump air conditioner for use in cold districts which operates in the heating mode by pumping up heat energy from outdoor air at temperature less than -15 °C, wherein at least a heat source side heat exchanger, a expansion device, a consumption side heat exchanger, and a scroll compressor are connected in sequence to constitute a refrigeration cycle.

According to a third aspect, there is provided a heat pump air conditioner for use in cold districts which operates in the heating mode by pumping up heat energy from outdoor air at temperature less than -15 °C, wherein at least a heat source side heat exchanger, a expansion device, a consumption side heat exchanger, and a scroll compresso are connected in sequence to constitute a refrigeration cycle, and a refrigerant circuit is provided for inject ing part of a liquid refrigerant circulating through th refrigeration cycle into a compression mechanism of the scroll compressor.

According to a fourth aspect, there is provided a heat pump air conditioner for use in cold districts which operates in the heating mode at the temperature of outdoor air less than -15 °C with the outdoor air used as a heat source, wherein at least an outdoor heat exchanger, an electrically operated refrigerant control valve, an indoor heat exchanger, a four-way valve, and a scroll compressor are connected in sequence by pipes to constitute a refrigeration cycle, and the air conditioner further comprises an outdoor fan for blowing outdoor air to the outdoor heat exchanger, an indoor fan for blowing indoor air to the indoor heat exchanger, a liquid refrigerant injection circuit for injecting a liquid refrigerant circulating through the refrigeration cycle into a compression mechanism of the scroll compressor, a compressor rotational speed controller for controlling a rotational speed of the scroll compressor, an outdoor fan rotational speed controller for controlling a rotational speed of the outdoor fan, an indoor fan rotational speed controller for controlling a rotational speed of the indoor fan, and a refrigerant control valve controller for controlling an opening degree of the electrically operated refrigerant control valve.

In the above heat pump air conditioner, preferably, the outdoor heat exchanger has a heat conducting area three or more times that of the indoor heat exchanger.

Further, an outdoor unit may be made up of at least the outdoor heat exchanger and the scroll compressor, and an indoor unit may be made up of at least the indoor heat exchanger and the indoor fan.

The above air conditioner may comprises one outdoor unit and a plurality of indoor units combined with each other.

According to a fifth aspect, there is provided a heat pump air conditioner for use in cold districts which operates in the heating mode at the temperature of outdoor air less than -15 °C with the outdoor air used as a heat source, wherein the air conditioner includes a first loop comprising at least an outdoor heat exchanger, an electrically operated refrigerant control valve, a four-way valve, and a scroll compressor which are connected in sequence by pipes, a second loop comprising an indoor heat exchanger and a heat medium conveying device which are connected in sequence by pipes, and an intermediate heat exchanger for carrying out heat exchange between a refrigerant circulating through the first loop and a fluid circulating through the second loop, the air conditioner further including a refrigerant circuit for injecting a liquid refrigerant circulating through the first loop into a compression mechanism of the scroll compressor.

Preferably, the outdoor unit has capacity corresponding to 3,73 kW (5 horsepower), while the indoor unit has capacity corresponding to 2,24 kW (3 horsepower).

In any of the above air conditioners, preferably, the scroll compressor has maximum efficiency at a pressure ratio ranging from 4.5 to 8.

In the heat pump air conditioner using outdoor air as a heat source according to the present invention, during the heating operation, the refrigerant circulates through the scroll compressor, the consumption side heat exchanger, the expansion device, the heat source side heat exchanger, and the scroll compressor in this order. Part of the liquid refrigerant condensed by the consumption side heat exchanger is injected into the compression mechanism. Also, the rotational speed of the scroll compressor is controlled depending upon the temperature of indoor air. When the temperature of outdoor air is low, a high heating capability is achieved by operating the scroll compressor at a high speed while the compressor is cooled with the liquid injection. As a result, the heat pump air conditioner for use in cold districts is realized. In such a situation where the temperature of outdoor air is low, the scroll compressor is operated at a high pressure ratio. This highly efficient operation can be achieved by increasing the number of turns of scroll lap, or by providing a valve at a delivery port of the scroll compressor. The scroll compressor operating at a high pressure ratio generates a great deal of heat, but the temperature of windings of a compressor drive motor and the delivery temperature of the refrigerant can be kept at a proper level by injecting the liquid refrigerant supplied from the liquid injection circuit into the compressor.

By so constructing the heat pump air conditioner using outdoor air as a heat source, even when the temperature of outdoor air falls down below -15 °C, the highly efficient operation is ensured by running the compressor at a high pressure ratio. Also, a high heating capability can be developed by the high-speed operation of the compressor. In other words, the heat pump air conditioner for use in cold districts, where the temperature of outdoor air falls down below -15 °C, is attained for the first time without using energy other than electricity, such as kerosene. Further, since the compressor is not heated to excessively high temperature, high reliability is ensured.

Additionally, the heat pump air conditioner having an improved heating capability is achieved because it is designed to be suitable particularly for use in cold districts, i.e., because the outdoor heat exchanger has an increased heat conducting area.

### BRIEF DESCRIPTION OF THE DRAWINGS

Fig. 1 is a chart showing meteorological data observed in Sapporo, Japan.
Fig. 2 is a diagram of one embodiment of a heat pump air conditioner using outdoor air as a heat source according to the present invention.
Fig. 3 is a vertical sectional view of one embodiment of a scroll compressor used in the present invention.
Fig. 4 is a horizontal sectional view of one embodiment of a stationary scroll and a rotating scroll in the scroll compressor used in the present invention.
Fig. 5 is a graph showing examples of characteristics of scroll compressors.
Fig. 6 is a block diagram of one embodiment of a control system in the air conditioner shown in Fig. 2.
Fig. 7 is an explanatory chart showing a refrigeration cycle during the heating operation plotted over the Mollier chart.
Fig. 8 is an explanatory chart showing the relationship between the temperature of outdoor air and a heating capability.
Fig. 9 is an explanatory chart showing the relationship between operating frequency and a pressure ratio of the compressor.
Fig. 10 is an explanatory chart showing the relationship between a heating capability and an actual heating load.
Fig. 11 is a diagram showing the arrangement of an outdoor unit and an indoor unit of a separation type air conditioner.
Fig. 12 is a diagram of one embodiment of an air conditioner for only heating purpose.
Fig. 13 is a diagram of one embodiment of an air conditioner including a plurality of indoor units connected to one outdoor unit.
Fig. 14 is a diagram of one embodiment of an air conditioner using a secondary refrigerant to effect heating and cooling of the indoor.
Fig. 15 is a diagram showing an example of combination of the outdoor unit and the indoor unit according to the present invention.
Fig. 16 is a diagram showing an example of combination of the outdoor unit and the indoor unit when the temperature of outdoor air is relatively high.

### DESCRIPTION OF THE PREFERRED EMBODIMENTS

The preferred embodiments of the present invention will be described hereinafter with reference to the drawings.

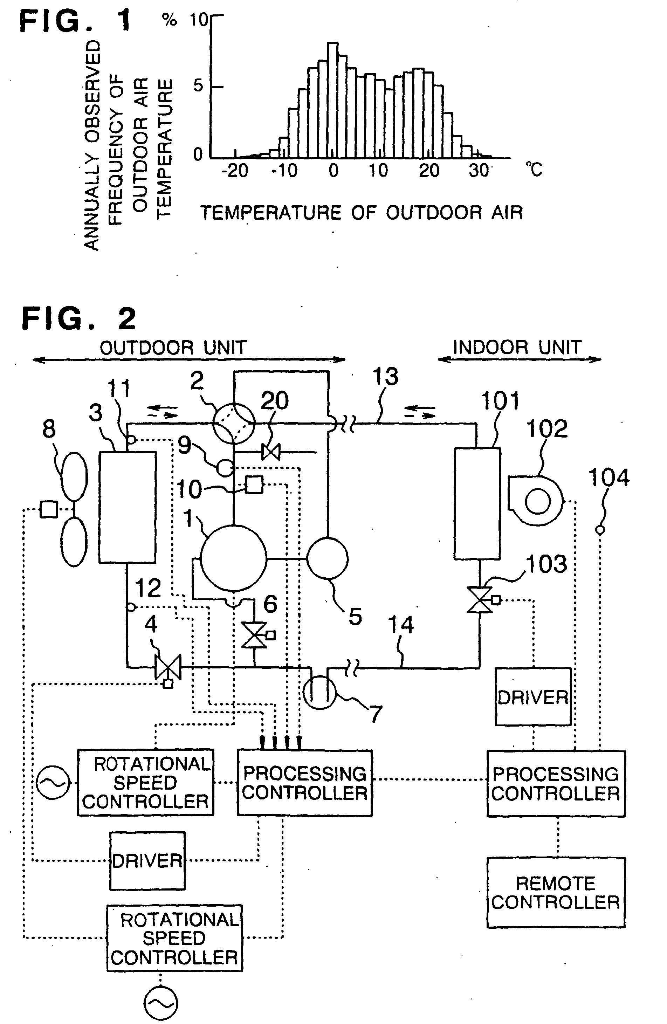

First, Fig. 1 shows frequency of the outdoor air temperature observed in Sapporo, a typical district in Japan where the temperature of outdoor air is extremely low in winter. As will be seen from Fig. 1, the temperature of outdoor air falls down to around -18 °C. However, it should be understood that because the meteorological data of Fig. 1 represents average values in the past, the lowest temperature of outdoor air is even lower than -18 °C, and that outdoor air may become lower temperature in more northern districts such as Asahikawa in Hokkaido. When designing air conditioners, therefore, it is required to consider the lowest temperature of outdoor air as around -20 °C.

Fig. 2 schematically shows the construction of one embodiment of a heat pump air conditioner according to the present invention, which is improved to be suitable for use in cold districts in view of the foregoing background. In Fig. 2, an outdoor unit comprises a scroll compressor 1, a four-way valve 2, an outdoor heat exchanger 3, an outdoor refrigerant control valve 4, an accumulator 5, a liquid injection refrigerant control valve 6, a receiver 7, an outdoor fan 8, a temperature sensor 9, a pressure sensor 10, temperature sensors 11, 12, and a hot gas bypass valve 20. The outdoor unit also incorporates controllers such as a processing controller, a compressor rotational speed controller, a refrigerant control valve driver, and an outdoor fan rotational speed controller.

An indoor unit comprises an indoor heat exchanger 101, an indoor fan 102, an indoor refrigerant control valve 103, and an indoor air temperature sensor 104. The indoor unit also incorporates a processing controller, an indoor fan rotational speed controller, a refrigerant control valve driver, and so on. The indoor unit further includes a remote controller with functions of, e.g., starting up a heat pump, selecting the heating or cooling mode, and setting the indoor temperature. Incidentally, 13 and 14 denote pipes for connecting the outdoor unit and the indoor unit to each other.

During the heating operation, a refrigerant circulates through the compressor 1, the four-way valve 2, the connecting pipe 13, the indoor heat exchanger 101, the indoor refrigerant control valve 103, the connecting pipe 14, the receiver 7, the outdoor refrigerant control valve 4, the outdoor heat exchanger 3, the four-way valve 2, and the accumulator 5 in this order. The outdoor refrigerant control valve 4 acts as an expansion valve and the indoor heat exchanger 101 serves as a refrigerant condenser to effect heating of the indoor. Part of the liquid refrigerant condensed by the indoor heat exchanger 101 is injected into the compressor 1 through the refrigerant control valve 6. On the other hand, during the cooling operation, the refrigerant circulates through the compressor 1, the four-way valve 2, the outdoor heat exchanger 3, the outdoor refrigerant control valve 4, the receiver 7, the connecting pipe 14, the indoor refrigerant control valve 103, the indoor heat exchanger 101, the connecting pipe 13, the four-way valve 2, and the accumulator 5 in this order. The indoor refrigerant control valve 103 acts as an expansion valve and the indoor heat exchanger 101 serves as a refrigerant evaporator to effect cooling of the indoor. Part of the liquid refrigerant condensed by the outdoor heat exchanger 3 is injected into the compressor 1 through the refrigerant control valve 6.

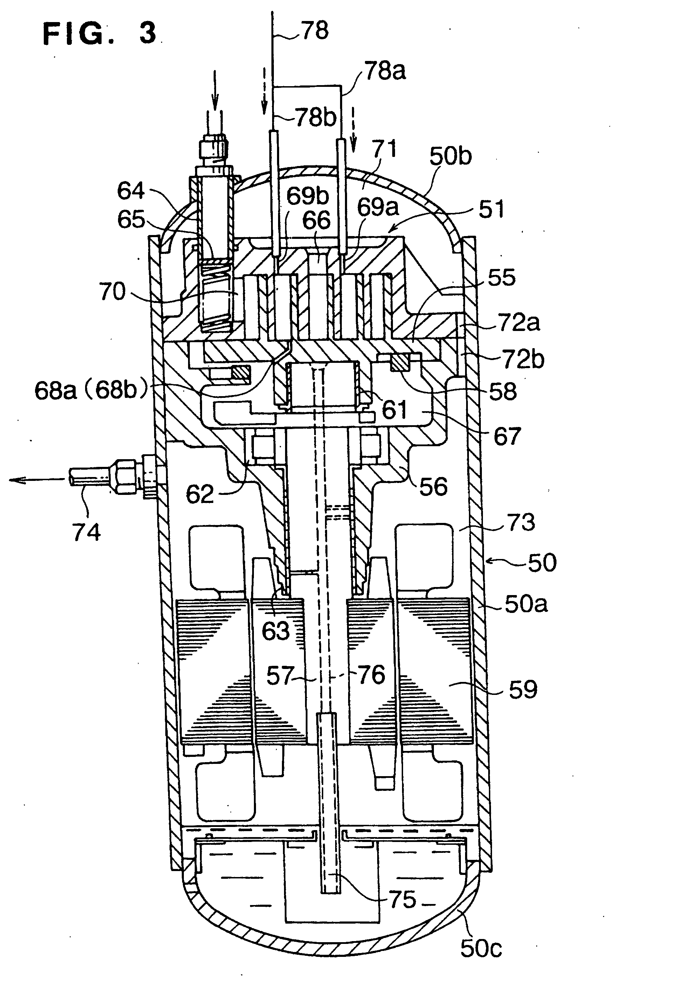

Fig. 3 is a vertical sectional view of one embodiment of the scroll compressor used in Fig. 2. Referring to Fig. 3, the scroll compressor comprises a chamber barrel 50, a chamber upper cap 50b, a chamber lower cap 50c, a stationary scroll 51, a rotating scroll 55, a frame 56, a shaft 57, an Oldham's ring 58, a motor 59, a rotating scroll bearing 61, a main bearing 62, a lower bearing 63, a refrigerant suction pipe 64, a check valve 65, a refrigerant delivery port 66, a back pressure chamber 67, back pressure ports 68a, 68b, liquid injection ports 69a, 69b, a suction chamber 70, a delivery chamber 71, delivered gas refrigerant passages 72a, 72b, a delivery pipe 74, an oil feed pipe 75, an oil feed passage 76, and liquid injection pipes 78, 78a, 78b.

The refrigerant is sucked from the suction pipe 64 and flows into the suction chamber 70. After being compressed in a compression chamber defined by the stationary scroll 51 and the rotating scroll 55, the refrigerant is delivered to the delivery chamber 71 through the delivery port 66. Then, the refrigerant passes through the refrigerant passages 72a, 72b, flows into a motor chamber 73, and is delivered through the delivery pipe 74. The refrigerant supplied from the liquid injection pipe 78 is introduced to the compression chamber through the liquid injection ports 69a, 69b.

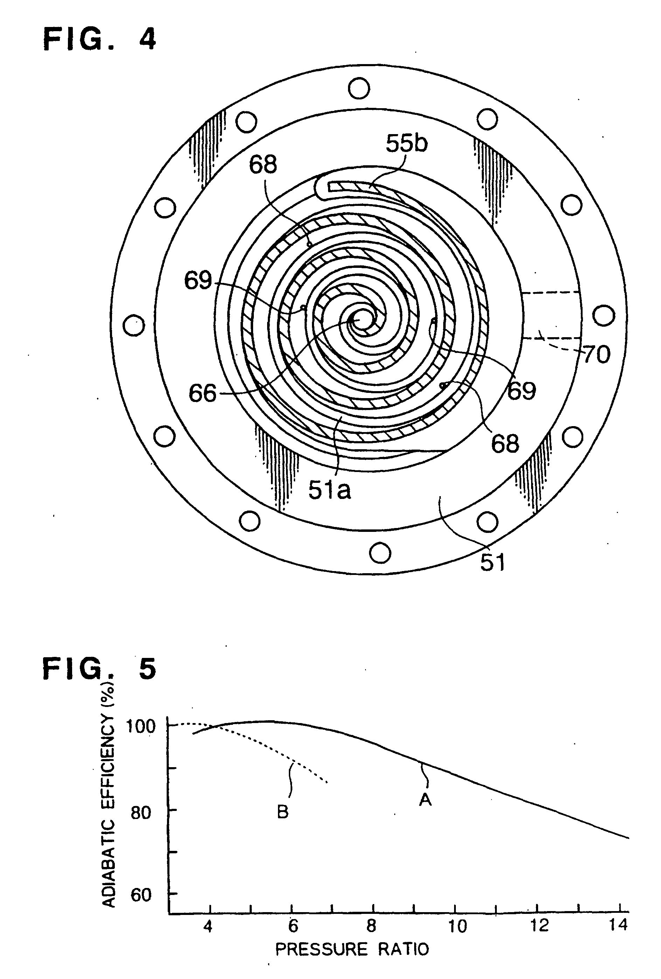

Fig. 4 is a horizontal sectional view of the stationary scroll and the rotating scroll combined with each other. Denoted by 51a is a stationary scroll lap and 55b is a rotating scroll lap. The other same numerals as in Fig. 3 denote the same parts described above in connection with Fig. 3. The number of turns of each scroll lap is 3.5. The sucked refrigerant is compressed as the compression chamber defined by the stationary scroll lap 51a and the rotating scroll lap 55b is diminished with the rotation of the rotating scroll, followed by being delivered through the delivery port 66.

Fig. 5 is a graph showing examples of the relationship between adiabatic efficiency and a pressure ratio of scroll compressors. In Fig. 5, a solid line A represents the characteristic of a scroll compressor in which the number of turns of scroll lap is 3.5 and the liquid injection is performed, and a broken line B represents the characteristic of a scroll compressor in which the number of turns of scroll lap is 2.5 and the liquid injection is not performed. As will be seen from Fig. 5, the scroll compressor having the number of turns of scroll lap equal to 3.5, represented by the solid line, exhibits higher efficiency in the range of high pressure ratio than the scroll compressor having the number of turns of scroll lap equal to 2.5, represented by the broken line. Thus, in the present invention, the pressure ratio of the compressor is set to be so high that the air conditioner can act as a heat pump even at the temperature of outdoor air lower than -15 °C. However, increasing the pressure ratio of the compressor raises the temperature in the compressor excessively, as described later, and may cause a trouble in the compressor. To avoid such an event, the refrigerant stored in the receiver 7 is sent into the compressor for cooling it.

While the scroll compressor having the large number of turns of scroll lap has been described in connection with Fig. 5, the highly efficient operation can also be realized in the range of high pressure ratio by providing a valve at the delivery port 66 in the compression mechanism even if the number of turns of scroll lap is set to be small.

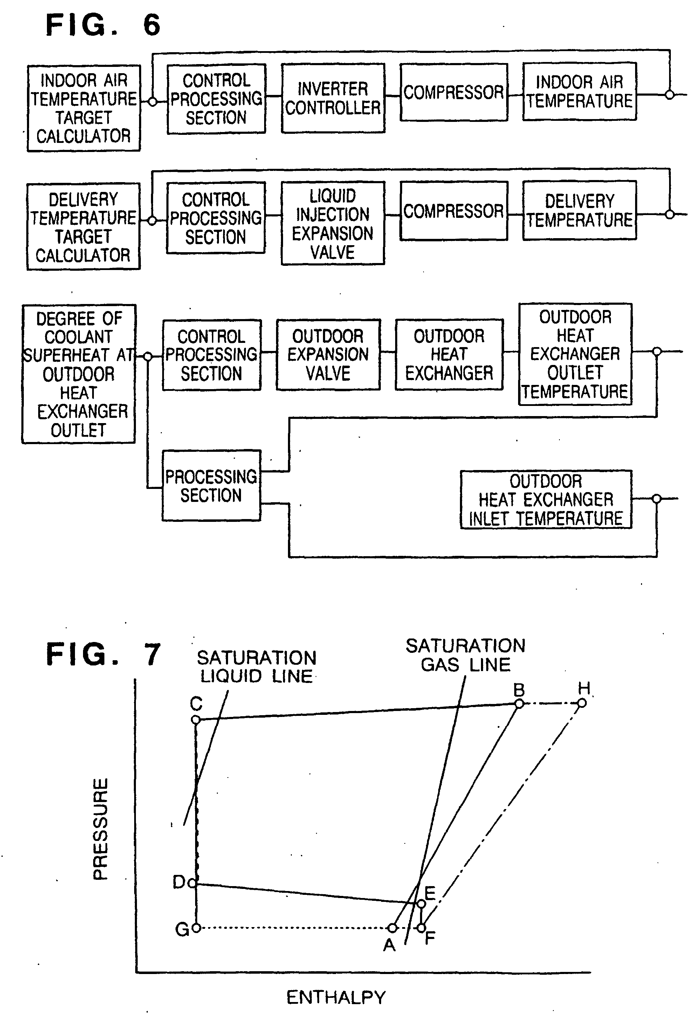

Fig. 6 is a block diagram of a control system for controlling the heating operation of the air conditioner, shown in Fig. 2, using air as a heat source. The compressor 1 is driven by a rotational speed controller, i.e., an inverter controller, in such a manner that the rotational speed is controlled depending on the difference between the indoor air temperature detected by the temperature sensor 104 and the control target value of the indoor air temperature. The liquid injection refrigerant control valve is controlled depending on the difference between the delivery side temperature of the compressor detected by the temperature sensor 9 and the target delivery temperature. The outdoor refrigerant control valve is controlled so that the difference between the temperatures detected by the temperature sensors 12 and 11 on the inlet and outlet sides of the outdoor heat exchanger is held equal to the target temperature difference, i.e., the degree of heating of the refrigerant at the outlet of the outdoor heat exchanger.

Fig. 7 shows a refrigeration cycle during the heating operation of the air conditioner using air as a heat source, shown in Fig. 2, the cycle being plotted over the Mollier chart. In Fig. 7, B represents the compressor outlet, C the outlet of the indoor heat exchanger, D the outlet of the outdoor refrigerant control valve, E the outlet of the outdoor heat exchanger, F the compressor inlet, and G the outlet of the liquid injection refrigerant control valve. Further, A represents the condition after the refrigerant at the point F and the refrigerant at the point G have been mixed with each other. A one-dot-chain line F → H → B represents the case where the liquid injection is not performed. As a result of the liquid injection, it is possible to reduce the delivery temperature and hence the temperature of windings of the compressor motor as compared with the case of not performing the liquid injection.

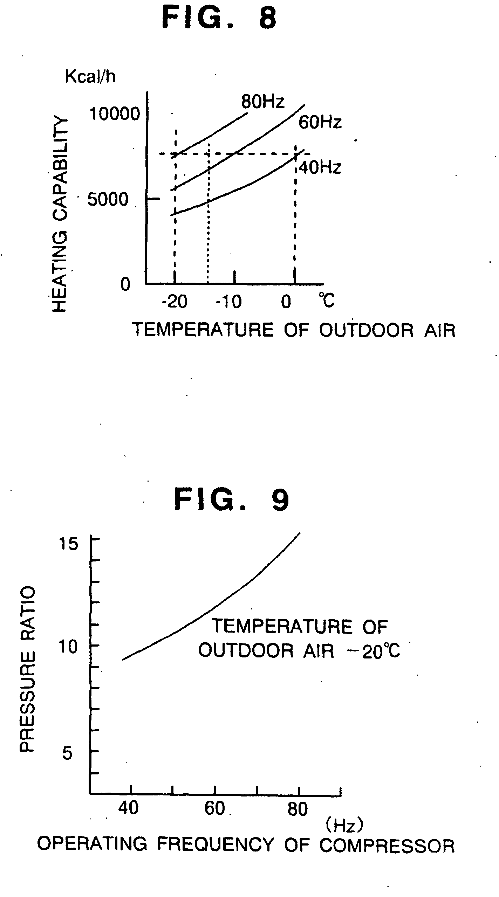

Fig. 8 is a chart showing the relationship between the temperature of outdoor air and a heating capability with the rotational speed of the compressor as a parameter, the chart plotting examples of characteristics of the inventive heat pump air conditioner using air as a heat source. As will be seen from Fig. 8, at the constant rotational speed of the compressor, the heating capability is reduced as the temperature of outdoor air falls, but the heating capability can be enhanced by increasing the rotational speed of the compressor. Also, by adjusting the rotational speed of the compressor, the heating capability can be held constant for the temperature of outdoor air ranging from around 0 °C to around -20 °C. Accordingly, the heat pump air conditioner of the present invention can develop a heating capability comparable to that of a heating apparatus which employs kerosene and is not affected by the temperature of outdoor air.

Fig. 9 is a chart showing the relationship between operating frequency and a pressure ratio of the compressor, the chart plotting one example of characteristics of the inventive heat pump air conditioner using air as a heat source. The temperature of outdoor air is -20 °C. When the operating frequency of the compressor is 80 Hz, the pressure ratio becomes about 15 and the compressor is operated under the condition of high pressure ratio. However, the scroll compressor can operate with a high heating capability as shown in Fig. 5 because the number of turns of scroll lap is set to be as large as 3.5 and the liquid injection is performed.

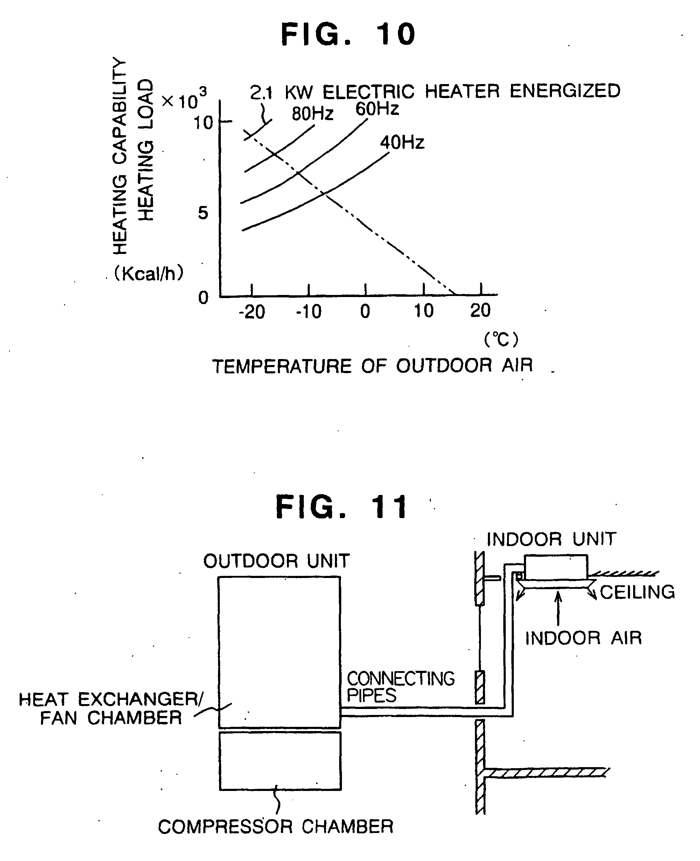

Fig. 10 shows examples of characteristics calculated on an assumption that the inventive heat pump air conditioner using air as a heat source is applied to an actual room provided in a building. In Fig. 10, a two-dot-chain line represents a heating load. As will be seen, at the temperature of outdoor air equal to -20 °C, the heating capability of the heat pump air conditioner using air as a heat source amounts to 10,467 kW (9000 kcal/h) by setting the rotational speed of the compressor to 80 Hz and adding an electric heater of 2.1 kW. Here, the heating load is supposed to be 0 when the temperature of outdoor air is 15 °C, and 10,467 kW (9000 kcal/h) corresponding to the heating capability of the heat pump air conditioner using air as a heat source when the temperature of outdoor air is -20 °C. In the condition of actual use, the rotational speed of the compressor is controlled so that the heating capability agrees with the heating load. In the heat pump air conditioner using air as a heat source, shown in Fig. 10, the compressor is intermittently operated with the operating frequency set to 40 Hz for the heating load resulted when the temperature of outdoor air is not less than around -10 °C. Since the heat conducting area of each of the outdoor heat exchanger and the indoor heat exchanger remains the same, a reduction in the operating frequency of the compressor reduces the pressure ratio and hence improves heating efficiency. This enables the compressor to be operated with consumption of reduced electric power.

**Table 1**

| Exemplarily Calculated Annual Operating Cost | | | | |
|---|---|---|---|---|
| | Total Calorie of Air Conditioning (kWh(kcal)) | Invention | Kerosene heating apparatus + air conditioner for only cooling purpose | |
| | | Amount of power | Amount of kerosene | Amount of power |
| Heating | (19210 x 10³) 22341,2 | 11.3 x 10³ kWh | 3.3 kl | 1.27 x 10³ kWh |
| Cooling | (3770 x 10³) 4384,5 | 1.52 x 10³ kWh | - - | 1.52 x 10³ kWh |
| Annual cost | | ¥290000 | ¥260000 | |
| Value in terms of primary energy | | (31.5 x 10⁶ kcal) 36634,5 kWh | (36.5 x 10⁶ kcal) 42449,5 kWh | |

Table 1 shows an example of the annual operating cost calculated for one embodiment of the present invention constructed as explained above. For comparison, Table 1 also shows the annual operating cost calculated for a system in which a kerosene heating apparatus and an air conditioner for only cooling purpose are combined with each other. The air conditioner of the present invention requires the annual operating cost about 10 % higher than the comparative system, but consumes primary energy about 15 % less than the comparative system. This means that the present invention contributes to reduced consumption of energy.

While Fig. 10 shows the heating capability including the electric heater added, the temperature of indoor air can be raised sufficiently without adding the electric heater when the heating load is small.

Fig. 11 shows one example of a system wherein an outdoor unit and an indoor unit are separated from each other. The outdoor unit comprises a heat exchanger /fan chamber housing an outdoor heat exchanger 3, a fan 8, etc. and a compressor chamber housing a compressor, etc. Of course, these two chambers may be one integrated chamber. While Fig. 11 shows an indoor unit of so-called ceiling buried type that a body of the indoor unit is buried in the ceiling. But it is needless to say that the present invention is also applicable to any other types of indoor units including one which is installed on the floor.

**Table 2**

| Areas of Outdoor and Indoor Heat Exchangers | | | |
|---|---|---|---|
| Invention | | Prior Art | |
| Indoor heat exchanger | Outdoor heat exchanger | Indoor heat exchanger | Outdoor heat exchanger |
| 13 m² | 40 m² | 13 m² | 21 m² |
| 100 % | 307 % | 100 % | 162 % |

Table 2 shows an example of heat conducting areas of the outdoor and indoor heat exchangers used in the air conditioner of the present invention. While a ratio of the heat conducting area of the outdoor heat exchanger to the heat conducting area of the indoor heat exchanger was less than two in the prior art, the ratio is recommended to be about three in order to sufficiently develop the operating effect of the present invention. Of course, the operating effect of the present invention can also be developed with the ratio set to about two.

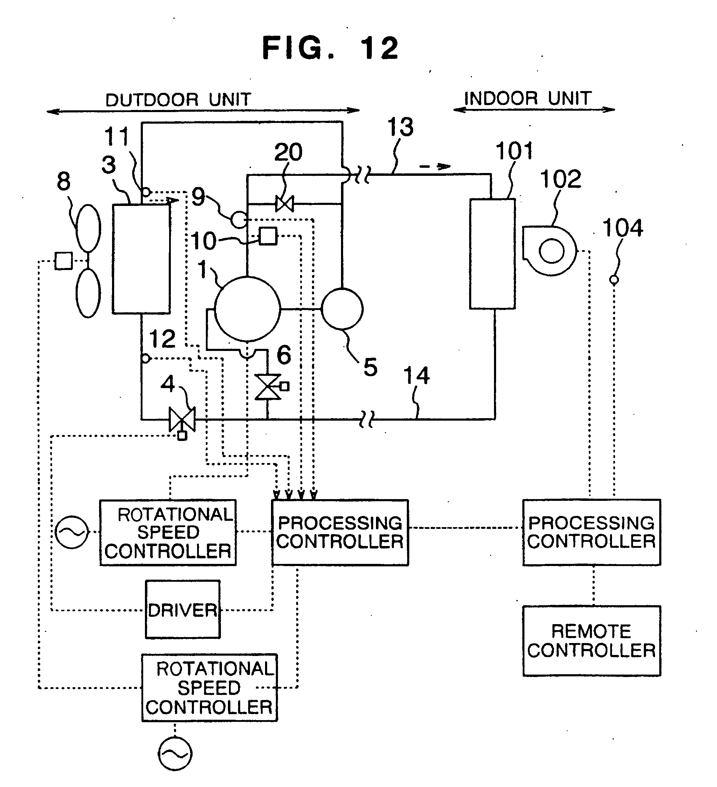

Modifications of the heat pump air conditioner of the present invention are shown in Fig. 12 and the subsequent figures. Fig. 12 shows one embodiment of an air conditioner for only heating purpose. In Fig. 12, an outdoor unit comprises a scroll compressor 1, an outdoor heat exchanger 3, an outdoor refrigerant control valve 4, an accumulator 5, a liquid injection refrigerant control valve 6, an outdoor fan 8, a temperature sensor 9, a pressure sensor 10, and temperature sensors 11, 12. The outdoor unit also incorporates controllers such as a processing controller, a compressor rotational speed controller, a refrigerant control valve driver, and an outdoor fan rotational speed controller.

An indoor unit comprises an indoor heat exchanger 101, an indoor fan 102, and an indoor air temperature sensor 104. The indoor unit also incorporates a processing controller, an indoor fan rotational speed controller, and so on. The indoor unit further includes a remote controller with functions of, e.g., starting up a heat pump, selecting the heating or cooling mode, and setting the indoor temperature. Incidentally, 13 and 14 denote pipes for connecting the outdoor unit and the indoor unit to each other.

During the operation of this air conditioner, a refrigerant circulates through the compressor 1, the connecting pipe 13, the indoor heat exchanger 101, the connecting pipe 14, the outdoor heat exchanger 3, and the accumulator 5 in this order. The indoor heat exchanger 101 serves as a refrigerant condenser to effect heating of the indoor. Part of the refrigerant condensed by the indoor heat exchanger 101 is injected into the compressor 1 through the refrigerant control valve 6.

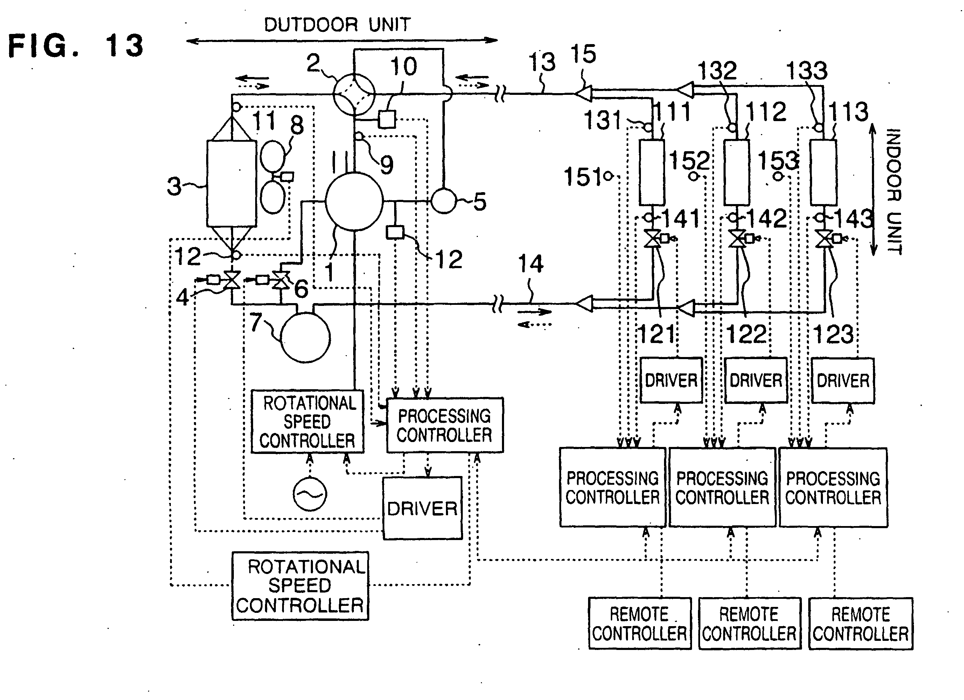

Fig. 13 shows another modification of the heat pump air conditioner of the present invention wherein a plurality of indoor units are connected to one outdoor unit. In Fig. 13, denoted by 15 is a refrigerant distributor, 111, 112, 113 are indoor heat exchangers, 121, 122, 123 are indoor refrigerant control valves, 131, 132, 133, 141, 142, 143 are refrigerant temperature sensors, and 151, 152, 153 are indoor air temperature sensors. During the heating operation, a refrigerant circulates in the direction indicated by arrows of broken lines, and the indoor heat exchangers 111, 112, 113 each serves as a refrigerant condenser to effect heating of the indoor. On the other hand, during the cooling operation, the refrigerant circulates in the direction indicated by arrows of solid lines, and the indoor heat exchangers 111, 112, 113 each serves as a refrigerant evaporator to effect cooling of the indoor.

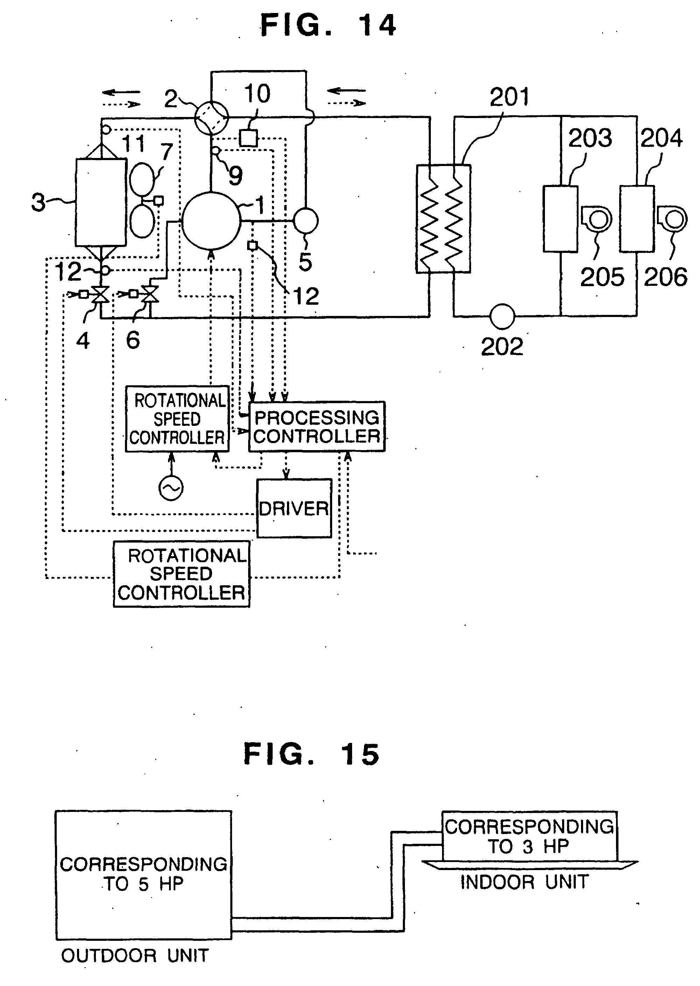

Fig. 14 shows still another modification of the heat pump air conditioner of the present invention wherein a system for circulating a second heat medium is installed in the indoor. In Fig. 14, denoted by 201 is an intermediate exchanger for carrying out heat exchange between a refrigerant circulating through a line inclusive of an outdoor heat exchanger and water circulating through a line inclusive of indoor heat exchangers, 202 is a pump, 203, 204 are indoor heat exchangers for carrying out heat exchange between the water and indoor air, and 205, 206 are indoor fans. During the heating operation, a refrigerant circulates in the direction indicated by arrows of broken lines, and the intermediate heat exchanger 201 serves as a refrigerant condenser to heat the water. The heated water is sent to the indoor heat exchangers by the pump 202 to effect heating of the indoor. On the other hand, during the cooling operation, the refrigerant circulates in the direction indicated by arrows of solid lines, and the intermediate heat exchanger 201 serves as a refrigerant evaporator to cool the water. The cooled water is sent to the indoor heat exchangers by the pump 202 to effect cooling of the indoor.

The above-described embodiments employ, as the refrigerant, an HCFC-base refrigerant R22. However, this refrigerant is now under restriction process for the reason of destroying the ozone layer, and will no longer be used in near future. The inventive heat pump air conditioner using air as a heat source can also employ refrigerants which destroy in no way the ozone layer, such as HFC-base refrigerants (e.g., R134A) and mixtures of HFC-base refrigerants (e.g., R407C and R410A). Further, flon-free refrigerants (e.g., propane) can also be employed in the present invention.

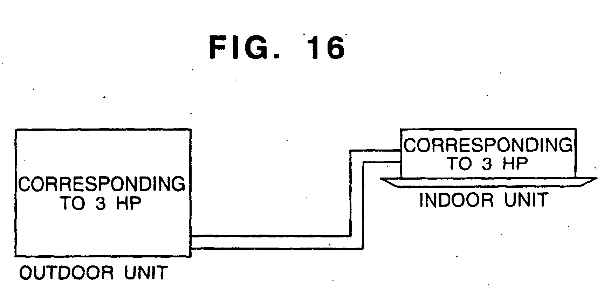

Still other modifications of the present invention will be described below with reference to Figs. 15 and 16. These figures show examples of combination of an outdoor unit and an indoor unit. Fig. 15 shows a heat pump air conditioner using outdoor air as a heat source wherein an indoor unit with capacity corresponding to 2,24 kW (3 horsepower (HP)) and an outdoor unit with capacity corresponding to 3,73 kW (5 horsepower) are combined with each other. By using the outdoor unit with capacity corresponding to 3,73 kW (5 horsepower), the air conditioner can be operated in the heating mode with a high heating capability even when the temperature of outdoor air falls down to around -20 °C.

Fig. 16 shows a heat pump air conditioner using outdoor air as a heat source wherein an indoor unit with capacity corresponding to 2,24 kW (3 horsepower (HP)) and an outdoor unit with capacity corresponding to 2,24 kW (3 horsepower) are combined with each other. When the inventive heat pump air conditioner using outdoor air as a heat source is employed in the districts where the lowest temperature of outdoor air is around -10 °C, the outdoor unit is not required to have larger capacity than the indoor unit. Thus, by changing the capacity of the outdoor unit depending upon the district where the air conditioner is to be employed, it is possible to achieve air conditioners having proper capacities corresponding to heating loads.

According to the present invention, as described above, even when the temperature of outdoor air is lower than -15 °C, particularly at around -20 °C, the heat pump air conditioner using outdoor air as a heat source can develop a heating capability comparable to that developed when the temperature of outdoor air is 0 °C, and hence can provide comfortable indoor air temperature. Of course, the air conditioner can also be operated in the cooling mode in summer.

The cost required for the inventive heat pump air conditioner using outdoor air as a heat source to effect heating and cooling is comparable to the cost required for an air conditioner which employs kerosene for heating and a refrigeration cycle for cooling. From trial calculation in terms of primary energy, it has proved that the inventive heat pump air conditioner can contribute to a saving in energy.

Furthermore, the inventive heat pump air conditioner employs neither kerosene nor gas and, therefore, it is a clean energy system less contaminating environments.

Additionally, the inventive heat pump air conditioner requires no complicated construction and is inexpensive.

The present invention can further provide a heat pump air conditioner using outdoor air as a heat source which has focused particularly on a heating capability suitable for use in cold districts.

## Claims

1. A heat pump air conditioner for use in cold districts, comprising a refrigeration cycle having a heat source side heat exchanger (3), an expansion device (4, 103), a consumption side heat exchanger (101) and a scroll compressor (1) having a rotational speed controller, in which a liquid refrigerant is injected into said scroll compressor (1) via a liquid injection expansion valve (6),
**characterized in that** a control system controls
said liquid injection expansion valve (6) depending on the difference between a delivery side temperature of said scroll compressor (1) detected by a temperature sensor (9) and a target delivery temperature of said scroll compressor (1).

2. A heat pump air conditioner for use in cold districts as claimed in claim 1, **characterized in that** a heat transfer area of said heat source side heat exchanger (3) is three or more times the heat transfer area of said consumption side heat exchanger (101).

3. A heat pump air conditioner for use in cold districts as claimed in claim 1, **characterized in that** the number of turns of scroll lap is not less than 3.

4. A heat pump air conditioner for use in cold districts as claimed in claim 1, **characterized in that** a delivery valve is provided in a scroll mechanism of the scroll compressor (1).

## Patentansprüche

1. Klimaanlage mit Wärmepumpe zur Verwendung in kalter Umgebung, umfassend einen Kältekreislauf, der einen wärmequellenseitigen Wärmetauscher (3), eine Expansionsvorrichtung (4, 103), einen verbraucherseitigen Wärmetauscher (101) und einen Scroll-Kompressor (1) aufweist, der einen Drehgeschwindigkeitscontroller aufweist, bei welchem ein flüssiges Kühlmittel in den Scroll-Kompressor (1) über ein Flüssigkeitsinjektionsexpansionsventil (6) injiziert wird,
**dadurch gekennzeichnet, dass** ein Steuersystem das Flüssigkeitsinjektionsexpansionsventil (6) steuert in Abhängigkeit von dem Unterschied zwischen einer zuführseitigen Temperatur des Scroll-Kompressors (1), die durch einen Temperatursensor (9) detektiert wird und einer Zielabgabetemperatur des Scroll-Kompressors (1).

2. Klimaanlage mit Wärmepumpe zur Verwendung in kalter Umgebung, wie in Anspruch 1 beansprucht, **dadurch gekennzeichnet, dass** ein Wärmeübertragungsbereich des wärmequellenseitigen Wärmetauschers (3) das Dreifache oder Mehrfache des Wärmeübertragungsbereichs des verbrauchsseitigen Wärmetauschers (101) beträgt.

3. Klimaanlage mit Wärmepumpe zur Verwendung in kalter Umgebung, wie in Anspruch 1 beansprucht, **dadurch gekennzeichnet, dass** die Anzahl der Umdrehungen der Scrollrunden nicht weniger als 3 beträgt.

4. Klimaanlage mit Wärmepumpe zur Verwendung in kalter Umgebung, wie in Anspruch 1 beansprucht, **dadurch gekennzeichnet, dass** ein Abgabeventil in einem Scroll-Mechanismus des Scroll-Kompressors (1) vorgesehen ist.

## Revendications

1. Climatiseur à pompe à chaleur destiné à être utilisé dans des régions froides, comportant un cycle de réfrigération ayant un échangeur thermique côté source de chaleur (3), un dispositif de détente (4, 103), un échangeur thermique côté consommation (101) et un compresseur à volute (1) ayant une commande de vitesse de rotation, un réfrigérant liquide étant injecté dans ledit compresseur à volutes (1) via une vanne de détente d'injection de liquide (6),
**caractérisé en ce qu'**un système de commande commande ladite vanne de détente d'injection de liquide (6) selon la différence entre une température côté sortie dudit compresseur à volutes (1) détectée par un capteur de température (9) et une température de sortie cible dudit compresseur à volutes (1).

2. Climatiseur à pompe à chaleur destiné à être utilisé dans des régions froides selon la revendication 1, **caractérisé en ce qu'**une zone de transfert thermique dudit échangeur thermique côté source de chaleur (3) est trois fois ou plus de trois fois la zone de transfert thermique dudit échangeur thermique côté consommation (101).

3. Climatiseur à pompe à chaleur destiné à être utilisé dans des régions froides selon la revendication 1, **caractérisé en ce que** le nombre de spires de recouvrement de volutes n'est pas inférieur à trois.

4. Climatiseur à pompe à chaleur destiné à être utilisé dans des régions froides selon la revendication 1, **caractérisé en ce qu'**un clapet de refoulement est prévu dans un mécanisme à volutes du compresseur à volutes (1).
